# FASCICULE DE BREVET EUROPEEN

(11) **EP 2 058 641 B1**
(45) Date de publication et mention de la délivrance du brevet: **26.05.2010**
(21) Numéro de dépôt: 08167593.6
(22) Date de dépôt: 27.10.2008
(51) Int. Cl.: G01N 1/24

(54) **Sonde iso-cinétique pour l'analyse de la pollution des gaz générés par un moteur d'avion**
Isokinetische Sonde zur Analyse der Verschmutzung der Gase, die von einem Flugzeugmotor erzeugt werden
Isokinetic probe for analysing pollution in the gases generated by an airplane engine

(30) Priorité: 31.10.2007 FR 0758751
(43) Date de publication de la demande: 13.05.2009
(73) Titulaire: Snecma, 75015 Paris (FR)
(72) Inventeur: Carichon, Sébastien, 77400 Saint Thibaut (FR); Del Arco, Serge, 77850 Hericy (FR); Harivel, Nadine, Alice, Hélène, 77000 Vaux le Penil (FR)
(74) Mandataire: Ilgart, Jean-Christophe

(56) Documents cités:
- FR-A- 2 141 220
- US-A- 3 252 323
- US-A- 3 395 516
- US-A- 4 034 611

## Description

### DOMAINE TECHNIQUE

L'invention concerne une sonde iso-cinétique, notamment pour l'analyse de la pollution des gaz générés par un moteur d'avion, comprenant un tube de prélèvement d'air présentant une extrémité amont introduite dans un conduit dans lequel circule une veine gazeuse, des moyens de réglage de la vitesse d'entrée de la veine gazeuse étant prévus à une embouche du tube de prélèvement.

Dans les avions de ligne, l'air de pressurisation de la cabine est fourni par un prélèvement effectué sur l'air comprimé par les moteurs. C'est pourquoi il est nécessaire de vérifier que cet air est exempt de polluants qui le rendraient impropre à être respiré par les passages de la cabine.

Le document FR-A-2 141 220 décrit une sonde iso-cinétique pour l'analyse de la pollution des gaz générés par un moteur d'avion. Elle comprend un tube de prélèvement d'air présentant une extrémité amont introduite dans un conduit dans lequel circule une veine gazeuse, des moyens de réglage de la vitesse d'entrée de la veine gazeuse étant prévus à une embouchure du tube de prélèvement.

Les documents US 4 034 611, US 3 252 323 et US 3 395 516 décrivent également un état de la technique pertinent.

On connaît déjà des sondes de mesure pour l'analyse de la pollution des gaz générés par un moteur d'avion. Ces sondes sont iso-cinétiques. On entend par là que l'air circule à la même vitesse dans l'extrémité de prélèvement de la sonde et dans la veine d'air dans laquelle on effectue le prélèvement. Des embouts de trois diamètres différents sont prévus, étant entendu que la vitesse d'entrée de l'air dans l'embout augmente quand le diamètre du trou de prélèvement diminue à iso-débit d'aspiration. Alternativement ou en plus, le réglage en entrée du tube de prélèvement est obtenu par un système de pompage en aval de la sonde.

Avec une telle sonde, la vitesse d'aspiration est connue avec une forte imprécision. De plus, le changement d'embout nécessite le démontage du tube de prélèvement. Or, ce démontage est malcommode et prend du temps. De plus, il est nécessaire de tester l'étanchéité du raccordement de la sonde sur la tuyauterie d'essais après remontage.

La présente invention a pour objet de remédier à ces inconvénients en proposant une sonde iso-cinétique facile à démonter et à remonter et dans laquelle la vitesse d'aspiration de l'air peut être connue avec une bonne précision.

Ces buts sont atteints conformément à l'invention par le fait que le tube présente une extrémité aval montée fixement sur une embase (fixation garantissant l'étanchéité), ladite embase possédant un diamètre extérieur monté dans un diamètre intérieur d'une douille de passage, le diamètre intérieur de la douille de passage étant suffisamment grand pour que l'extrémité amont du tube soit apte à passer au travers du diamètre intérieur de la douille de passage, la sonde comportant en outre une chambre de mesure ayant une extrémité raccordée à l'embase.

Grâce à ces caractéristiques, on peut extraire le tube de prélèvement depuis l'extérieur du conduit sans avoir accès à l'intérieur de ce conduit, simplement en retirant le tube de prélèvement et l'embase dont il est solidaire hors du tube de passage.

De préférence, l'extrémité du tube de prélèvement est coudée.

Selon une réalisation, l'embase possède une partie évasée qui s'engage dans une partie évasée correspondant de la douille de passage.

Avantageusement, la partie évasée de l'embase est maintenue fermement en appui sur la partie évasée de la douille de passage par l'intermédiaire d'un écrou.

De préférence, la chambre de mesure possède une extrémité terminée par un ajutage, ledit ajutage étant maintenu fermement en appui sur la partie évasée de l'embase par l'intermédiaire de l'écrou.

Grâce à ces caractéristiques, on réalise un montage simple et aisé à démonter du tube de prélèvement dans la veine gazeuse. Pour démonter le tube de prélèvement, il suffit de dévisser l'écrou qui maintient l'ajutage de la chambre de mesure sur la partie évasée de l'embase, ce qui libère cette dernière et permet de la retirer par le diamètre intérieur de la douille de passage.

Dans une réalisation préférée, la sonde iso-cinétique de l'invention comporte, prévus dans la chambre de mesure, des moyens de mesure de la pression statique, de la pression totale et de la température.

Le moyen de mesure de la pression totale est par exemple un tube de Pitot.

Le moyen de mesure de la température est constitué, par exemple, par un thermocouple.

La connaissance des trois paramètres pression totale, pression statique et température permet de calculer le débit. La valeur du débit obtenu permet d'obtenir la vitesse du gaz pour une géométrie donnée dans la chambre de mesure. La connaissance de la vitesse du gaz dans la chambre de mesure permet, par des équations de conservation de débit, de calculer la vitesse du gaz en amont, c'est-à-dire au niveau de l'embouchure du tube de prélèvement.

Avantageusement, la sonde iso-cinétique comporte plusieurs tubes de prélèvement ayant des extrémités coudées de différents diamètres, ces tubes de prélèvement étant montés chacun sur une embase de diamètre extérieur commun, ce diamètre étant suffisamment grand pour que l'extrémité coudée du tube de plus fort diamètre soit apte à passer au travers du diamètre intérieur de la douille de passage.

Ainsi, on peut régler la vitesse de pénétration des gaz dans le tube de prélèvement facilement en changeant le tube. Cette opération peut être effectuée rapidement car, comme on l'a expliqué antérieurement, le tube de prélèvement peut être démonté facilement et rapidement par l'extérieur.

Il est également possible d'ajuster la vitesse d'aspiration des gaz à l'embouchure du tube de prélèvement au moyen d'une pompe d'aspiration raccordée à la chambre de mesure. Cette pompe permet d'accélérer la vitesse de l'air à l'entrée du tube de prélèvement et donc de rendre cette vitesse égale à la vitesse de l'air dans le conduit.

Selon encore une autre réalisation, la sonde iso-cinétique comporte un diaphragme permettant de faire varier la section de passage à l'entrée de l'extrémité du tube de prélèvement d'air. Grâce à la présence de ce diaphragme, qui peut être actionné depuis l'extérieur du conduit, on peut faire varier de manière continue la section de passage offerte aux gaz, et par conséquent, la vitesse du gaz à l'embouchure du tube de prélèvement.

D'autres caractéristiques et avantages de la présente invention apparaîtront encore à la lecture de la description qui suit d'un exemple de réalisation donné à titre illustratif en référence aux figures annexées. Sur ces figures :
- la figure 1 est une vue générale en coupe d'une sonde iso-cinétique conforme à la présente invention ;
- la figure 2 est une vue extérieure de la sonde iso-cinétique représentée sur la figure 1 ;
- la figure 3 est une vue en perspective de la sonde iso-cinétique représentée sur les figures 1 et 2 ;
- la figure 4 est une vue en coupe selon le plan IV-IV de la figure 1 ;
- la figure 5 est une vue extérieure en perspective de l'extrémité supérieure de la sonde de l'invention ;
- la figure 6 est une vue de détails d'un système de détrompage et d'anti-rotation ;
- les figures 7 à 9 sont trois vues en coupe d'une sonde iso-cinétique conforme à la présente invention avec des diamètres de tubes de prélèvement de diamètres décroissants.

La sonde iso-cinétique de l'invention, désignée par la référence générale 2, se compose d'un tube de prélèvement 4 et d'une chambre de mesure 6. Le tube de prélèvement 4 comporte une extrémité aval 8 dont une embase 10 est solidaire. L'embase 10 est par exemple brasée ou soudée à l'extrémité 8 du tube de prélèvement. L'embase 10 possède un diamètre extérieur qui est ajusté dans le diamètre intérieur d'une douille de passage 12. La douille de passage 12 est elle-même fixée, par exemple soudée ou brasée, à l'extérieur d'un conduit 14 de grand diamètre.

L'embase 10 possède une extrémité évasée, conique dans l'exemple de réalisation représenté 16. Cette partie conique vient en appui sur une partie conique complémentaire 18 de la douille de passage 12. L'extrémité inférieure de la chambre de mesure comporte un ajutage 20 qui vient en appui contre la partie intérieure de la partie conique 16. L'ajutage 20 est lui-même maintenu serré par un écrou 22. Ainsi, la partie conique 16 est prise entre la partie conique 18 de la douille de passage 12 et l'extrémité conique de l'ajutage 20.

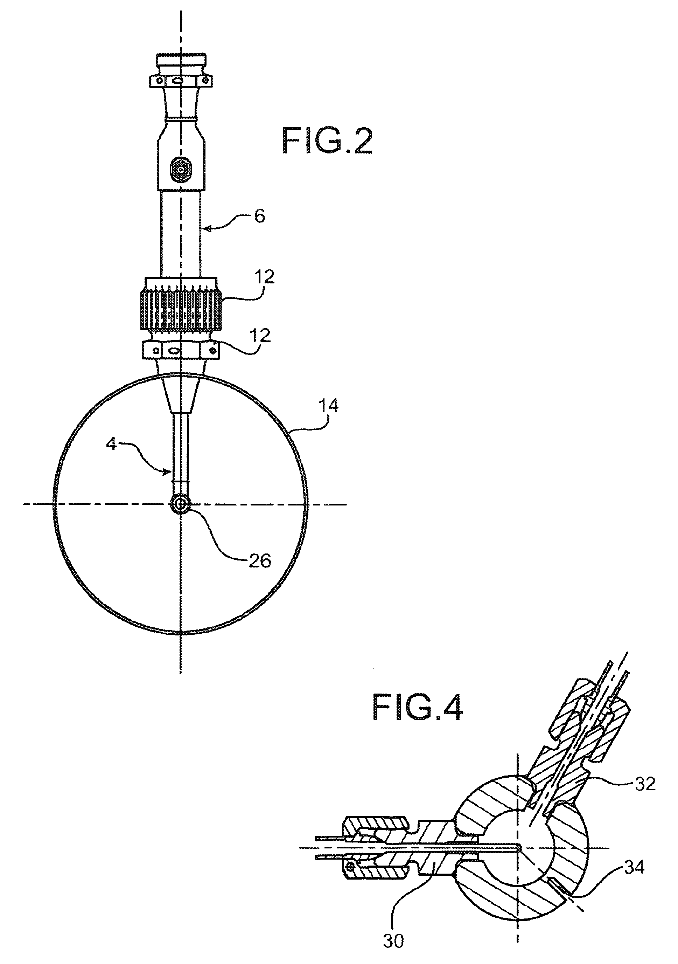

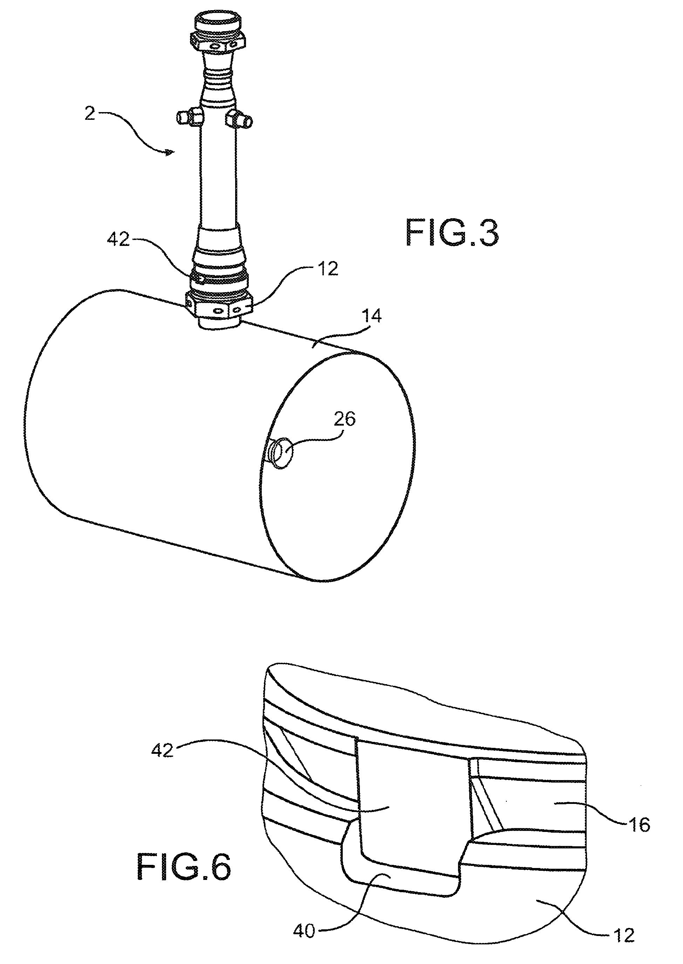

Le tube de prélèvement 4 possède une extrémité amont 24 qui comporte une embouchure (26) et une partie coudée 28. Comme on peut le voir sur les figures 2 et 3, le conduit 14 présente une section circulaire et l'embouchure 26 se trouve située au centre de la section circulaire du conduit 14.

L'extraction du tube de prélèvement s'effectue de la manière suivante. Tout d'abord, on desserre et on retire l'écrou 22 qui comporte une partie filetée en prise avec la douille de passage 12. L'écrou étant dévissé, on retire la chambre de mesure (6) ce qui libère l'embase 10. Il est alors possible de retirer le tube de prélèvement 4 dans son ensemble en le faisant passer à travers la douille de passage 12. Il convient de noter que, à cet effet, le diamètre intérieur d de l'alésage prévu dans la douille de passage est suffisamment grand pour permettre le passage de la partie coudée 28 du tube ainsi que de son embouchure 26, laquelle présente une forme évasée.

Le remontage du tube, ou le montage d'un nouveau tube, s'effectue en sens inverse. On constate ainsi que l'on peut changer rapidement le tube de prélèvement 4 sans avoir accès à l'intérieur du conduit 14.

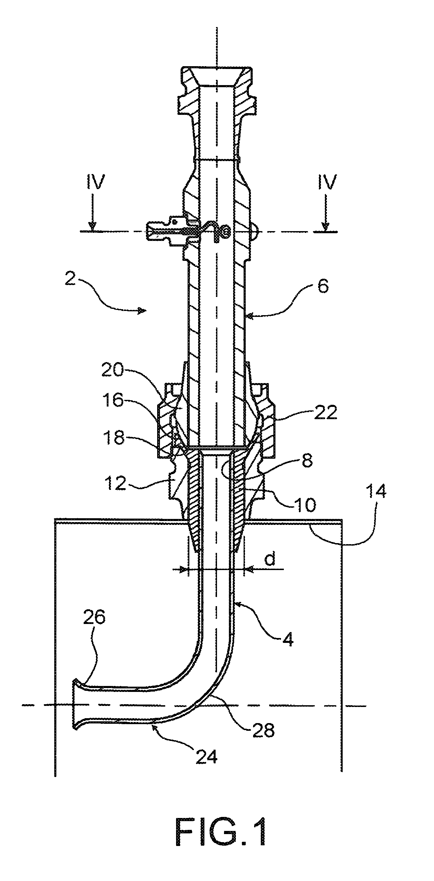

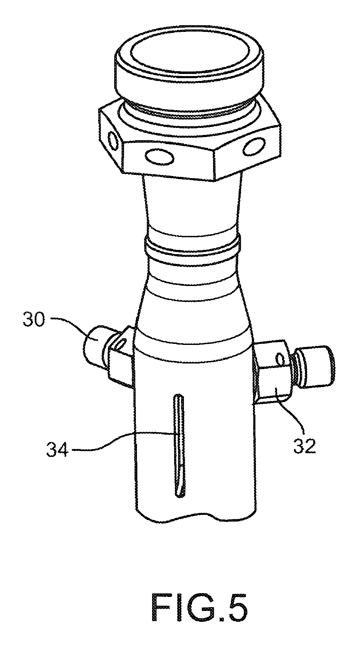

On a représenté sur la figure 4 une vue en coupe selon le plan IV-IV de la figure 1, et sur la figure 5, une vue extérieure en perspective de moyens de mesure. Ces moyens de mesure comportent un moyen de mesure de la pression totale constitué par un tube de Pitot 30, des moyens de mesure de la pression statique constitués par un capteur de pression statique 32 et des moyens de mesure de la température.

La connaissance de la pression totale, de la pression statique et de la température permet le calcul du débit par les équations de Bernouilli. La connaissance du débit permet de calculer la vitesse pour une géométrie donnée. Le fait de connaître la vitesse du fluide au niveau de la chambre de mesure permet, par des équations de conservation du débit, de connaître la vitesse en amont, c'est-à-dire à l'embouchure 26 du tube de prélèvement 4.

Afin de garantir une orientation-angulaire de l'embouchure 26 du trou parfaitement alignée avec l'axe longitudinal du conduit circulaire 14, on a prévu des moyens d'orientation angulaire. Dans l'exemple de réalisation représenté, ces moyens sont constitués par une gorge 40 formée de la douille de passage 12 et par un ergot 42 formé dans la partie conique 16 de l'embase 10. Lorsque l'ergot 42 est introduit dans la gorge 40, on est assuré que l'embouchure 26 présente la bonne orientation angulaire par rapport au conduit 14. Par ailleurs, l'ergot 42 empêche le tube de prélèvement de tourner par rapport à la douille de passage 12. L'ergot 42 assure donc en même temps une fonction anti-rotation.

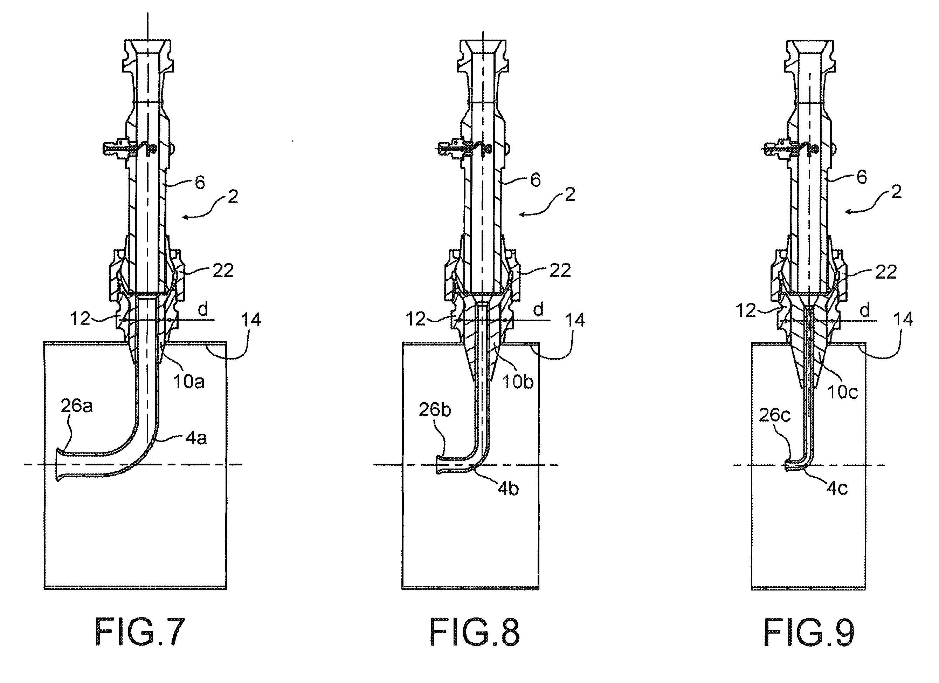

On a représenté sur les figures 7, 8 et 9 trois vues d'une même sonde iso-cinétique conforme à la présente invention équipée de tubes de prélèvement 4a, 4b et 4c de diamètre différent. Le tube de plus grand diamètre est le tube 4a. Son diamètre est plus grand que celui du tube 4b qui possède lui-même un diamètre plus grand que celui du tube 4c. En revanche, le diamètre extérieur d des différentes embases 10a, 10b et 10c est le même. Ainsi, on peut monter dans la sonde iso-cinétique 2 des tubes de diamètre différent, ce qui permet de régler la vitesse dans l'embouchure 26a, 26b ou 26c. La vitesse est d'autant plus forte que le diamètre du tube est plus petit. En conséquence, pour une capacité de pompage donnée, la sonde de plus fort diamètre sera choisie pour les faibles vitesses d'air dans le tube (à l'opposé, le plus petit diamètre sera choisi pour les fortes vitesses d'air dans le tube). Pour remplacer un tube par un autre, on dévisse l'écrou 22, on retire la chambre de mesure 6. Le tube de prélèvement 4a, 4b ou 4c est alors accessible directement. Le diamètre extérieur de l'embase 10a, 10b ou 10c peut coulisser librement dans le diamètre intérieur de la douille de passage 12. On observera que le diamètre intérieur d de la douille de passage 12 est prévu suffisamment grand pour que le tube de plus fort diamètre, en l'occurrence le tube 4a, puisse passer dans l'alésage prévu dans la douille de passage. Le tube de prélèvement à remplacer ayant été enlevé, on place un autre tube de passage, par exemple le tube 4b ou 4c puis on remet en place la chambre de mesure 6 et on revisse l'écrou 22. Le changement est ainsi terminé. On remarquera que ce changement s'effectue rapidement en garantissant l'étanchéité du montage et sans avoir accès à l'intérieur du conduit 14.

## Revendications

1. Sonde iso-cinétique notamment pour l'analyse de la pollution des gaz générés par un moteur d'avion, comprenant un tube de prélèvement d'air présentant une extrémité amont (24) introduite dans un conduit (14) dans lequel circule une veine gazeuse, des moyens de réglage de la vitesse d'entrée de la veine gazeuse étant prévus à une embouchure du tube de prélèvement, **caractérisée en ce que** le tube (4) présente une extrémité aval montée fixement sur une embase (10), ladite embase (10) possédant un diamètre extérieur monté dans un diamètre intérieur d d'une douille de passage (12), le diamètre intérieur de la douille de passage étant suffisamment grand pour que l'extrémité amont (24) du tube (4) soit apte à passer au travers du diamètre intérieur de la douille de passage (12), la sonde comportant en outre une chambre de mesure (6) ayant une extrémité raccordée à l'embase.

2. Sonde iso-cinétique selon la revendication 1, **caractérisée en ce que** l'extrémité amont (24) du tube de prélèvement est coudée.

3. Sonde iso-cinétique selon la revendication 1 ou 2, **caractérisée en ce que** l'embase (10) possède une partie évasée (16) qui s'engage dans une partie évasée correspondante (18) de la douille de passage (12).

4. Sonde iso-cinétique selon la revendication 3, **caractérisée en ce que** la partie évasée de l'embase est maintenue fermement en appui sur la partie évasée (18) de la douille de passage par l'intermédiaire d'un écrou (22).

5. Sonde iso-cinétique selon la revendication 4, **caractérisée en ce que** la chambre de mesure possède une extrémité terminée par un ajutage (20), ledit ajutage étant maintenu fermement en appui sur la partie évasée de l'embase par l'intermédiaire de l'écrou (22).

6. Sonde iso-cinétique selon la revendication 1, **caractérisée en ce qu'**elle comporte, prévus dans la chambre de mesure (6), des moyens de mesure de la pression statique, de la pression totale et de la température (30, 32, 34).

7. Sonde iso-cinétique selon la revendication 6, **caractérisée en ce que** le moyen de mesure de la pression totale est un tube de Pitot (30).

8. Sonde iso-cinétique selon la revendication 6 ou 7, **caractérisée en ce que** le moyen de mesure de la température est constitué par un thermo-couple.

9. Sonde iso-cinétique selon l'une des revendications 1 ou 2, **caractérisée en ce qu'**elle comporte plusieurs tubes de prélèvement (4a, 4b, 4c) ayant des extrémités amont de différents diamètres, ces tubes de prélèvement étant montés chacun sur une embase de diamètre extérieur d commun, ce diamètre étant suffisamment grand pour que l'extrémité amont du tube de plus fort diamètre (4a) soit apte à passer au travers du diamètre intérieur de la douille de passage (12).

10. Sonde iso-cinétique selon l'une des revendications 1 ou 2, **caractérisée en ce qu'**elle comporte au moins une pompe d'aspiration raccordée à la chambre de mesure, ladite pompe permettant d'ajuster la vitesse d'aspiration des gaz à l'embouchure du tube de prélèvement (26).

11. Sonde iso-cinétique selon l'une des revendications 1 ou 2, **caractérisée en ce qu'**elle comporte une diaphragme permettant de faire varier la section de passage à l'entrée de l'extrémité du tube de prélèvement d'air.

## Claims

1. Iso-kinetic probe, particularly for the analysis of the pollution of gases generated by an aircraft engine, comprising an air tapping tube having an upstream end (24) inserted into a conduit (14) wherein a gas stream flows, gas stream inlet velocity adjustment means being provided at an orifice of the tapping tube, **characterised in that** the tube (4) has a downstream end mounted in a fixed manner on a base (10), said base (10) having an outer diameter mounted in an inner diameter d of a passage bushing (12), the inner diameter of the passage bushing being sufficiently great so that the upstream end (24) of the tube (4) is suitable to fit through the inner diameter of the passage bushing (12), the probe also comprising a measurement chamber (6) having an end connected to the base.

2. Iso-kinetic probe according to claim 1, **characterised in that** the upstream end (24) of the sampling tube is curved.

3. Iso-kinetic probe according to claim 1 or 2, **characterised in that** the base (10) has a flared part (16) which is inserted in a corresponding flared part (18) of the passage bushing (12).

4. Iso-kinetic probe according to claim 3, **characterised in that** the flared part of the base is held firmly in place resting on the flared part (18) of the passage bushing by means of a nut (22).

5. Iso-kinetic probe according to claim 4, **characterised in that** the measurement'chamber hats an end tapered with a nozzle (20), said nozzle being held firmly in place resting on the flared part of the base by means of the nut (22).

6. Iso-kinetic probe according to claim 1, **characterised in that** it comprises, provided in the measurement chamber (6), static pressure, total pressure and temperature measurement means (30, 32, 34).

7. Iso-kinetic probe according to claim 6, **characterised in that** the total pressure measurement means is a Pitot tube (30).

8. Iso-kinetic probe according to claim 6 or 7, **characterised in that** the temperature measurement means consists of a thermocouple.

9. Iso-kinetic probe according to any of claims 1 or 2, **characterised in that** it comprises several tapping tubes (4a, 4b, 4c) having upstream ends of different diameters, said tapping tubes each being mounted on a base of a common outer diameter d, said diameter being sufficiently great so that the curved end of the tube with the greatest diameter (4a) is suitable to fit through the inner diameter of the passage bushing (12).

10. Iso-kinetic probe according to any of claims 1 or 2, **characterised in that** it comprises at least one intake pump connected to the measurement chamber, said pump making it possible to adjust the gas intake velocity of at the orifice of the tapping tube (26).

11. Iso-kinetic probe according to any of claims 1 or 2, **characterised in that** it comprises a diaphragm making it possible to vary the passage cross-section at the inlet of the end of the air tapping tube.

## Patentansprüche

1. Isokinetische Sonde, insbesondere zur Analyse der Verschmutzung der von einem Flugzeugmotor erzeugten Gase, mit einem Luftentnahmerohr, das ein stromaufwärts gelegenes Ende (24) aufweist, welches in einen Kanal (14) eingerührt ist, in dem eine Gasströmung zirkuliert, wobei Mittel zur Regelung der Eingangsgeschwindigkeit der Gasströmung an einer Mündung des Entnahmerohrs vorgesehen sind, **dadurch gekennzeichnet, dass** das Rohr (4) ein stromabwärts gelegenes Ende aufweist, das fest an einem Sockel (10) angebracht ist, wobei der Sockel (10) einen Außendurchmesser besitzt, der in einem Innendurchmesser d einer Durchgangshitlse (12) angebracht ist, wobei der Innendurchmesser der Durchgangshülse groß genug ist, damit das stromaufwärts gelegene Ende (24) des Rohrs (4) durch den Innendurchmesser der Durchgangshülse (12) laufen kann, wobei die Sonde ferner eine Messkammer (6) mit einem Ende aufweist, das an den Sockel angeschlossen ist.

2. Isokinetische Sonde nach Anspruch 1, **dadurch gekennzeichnet, dass** das stromaufwärts gelegene Ende (24) des Entnahmerohrs gebogen ist.

3. Isokinetische Sonde nach Anspruch 1 oder 2, **dadurch gekennzeichnet, dass** der Sockels (10) einen aufgeweiteten Teil (16) aufweist, der mit einem entsprechenden aufgeweiteten Teil (18) der Durchgangshülse (12) in Eingriff steht.

4. Isokinetische Sonde nach Anspruch 3, **dadurch gekennzeichnet, dass** der ausgeweitete Teil des Sockels über eine Mutter (22) fest in Anlage an dem aufgeweiteten Teil (18) der Durchgangshül.se (12) gehalten wird.

5. Isokinetische Sonde nach Anspruch 4, **dadurch gekennzeichnet, dass** die Messkammer ein Ende besitzt, welches durch einen Stutzen (20) abgeschlossen ist, wobei der Stutzen über die Mutter (22) fest in Anlage an dem aufgeweiteten Teil des Sockels gehalten wird.

6. Isokinetische Sonde nach Anspruch 1, **dadurch gekennzeichnet, dass** sie in der Messkammer (6) vorgesehene Mittel (30, 32, 34) zum Messen des statischen Drucks, des Gesamtdrucks und der Temperatur aufweist.

7. Isokinetische Sonde nach Anspruch 6, **dadurch gekennzeichnet, dass** das Mittel zum Messen des Gesamtdrucks ein Pitotrohr (30) ist.

8. Isokinetische Sonde nach Anspruch 6 oder 7, **dadurch gekennzeichnet, dass** das Mittel zum Messen der Temperatur durch ein Thermoelement gebildet ist.

9. Isokinetische Sonde nach einem der Ansprüche 1 oder 2, **dadurch gekennzeichnet, dass** sie mehrere Entnahmerohre (4a, 4b, 4c) mit stromaufwärts gelegenen Enden unterschiedlicher Durchmesser aufweist, wobei diese Entnahmerohre jeweils an einem Sockels mit gemeinsamem Außendurchmesser d angebracht sind, wobei dieser Durchmesser groß genug ist, damit das stromaufwärts gelegene Ende des Rohrs (4a) mit größerem Durchmesser durch den Innendurchmesser der Durchgangshülse (12) laufen kann.

10. Isokinetische Sonde nach einem der Ansprüche 1 oder 2, **dadurch gekennzeichnet, dass** sie wenigstens eine an die Messkammer angeschlossene Pumpe aufweist, wobei die Pumpe erlaubt, die Ansauggeschwindigkeit der Gase an der Mündung des Entnahmerohrs (26) einzustellen.

11. Isokinetische Sonde nach einem der Ansprüche 1 oder 2, **dadurch gekennzeichnet, dass** sie eine Membran aufweist, die ermöglicht, den Durchgangsquerschnitt am Eingang des Endes des Luftentnahmerohrs variieren zu lassen.
